(19) 

Europäisches
Patentamt
European
Patent Office
Office européen
des brevets

(11)     EP 4 742 315 A1

(12)                EUROPEAN PATENT APPLICATION
                    published in accordance with Art. 153(4) EPC

(43) Date of publication:
     13.05.2026  Bulletin 2026/20

(51) International Patent Classification (IPC):
     H01M 4/131 (2010.01)     H01M 10/0525 (2010.01)

(21) Application number: 23945614.8

(22) Date of filing: 24.10.2023

(52) Cooperative Patent Classification (CPC):
     H01M 4/525; H01M 4/131; H01M 4/366;
     H01M 4/505; H01M 4/5825; H01M 10/0525;
     H01M 2004/021; H01M 2004/028; Y02E 60/10

(86) International application number:
     PCT/CN2023/126260

(87) International publication number:
     WO 2025/015733 (23.01.2025 Gazette 2025/04)

(84) Designated Contracting States:
     AL AT BE BG CH CY CZ DE DK EE ES FI FR GB
     GR HR HU IE IS IT LI LT LU LV MC ME MK MT NL
     NO PL PT RO RS SE SI SK SM TR
     Designated Extension States:
     BA
     Designated Validation States:
     KH MA MD TN

(30) Priority:  18.07.2023  CN 202310882443

(71) Applicant: Contemporary Amperex Technology
     Co., Limited
     Ningde, Fujian 352100 (CN)

(72) Inventors:
     • WU, Kai
       Ningde, Fujian 352100 (CN)
     • PEI, Renjie
       Ningde, Fujian 352100 (CN)
     • SHANG, Yibo
       Ningde, Fujian 352100 (CN)
     • PAN, Jianfu
       Ningde, Fujian 352100 (CN)
     • QIN, Yiming
       Ningde, Fujian 352100 (CN)
     • XU, Xiaofu
       Ningde, Fujian 352100 (CN)
     • HE, Jianfu
       Ningde, Fujian 352100 (CN)
     • YE, Yonghuang
       Ningde, Fujian 352100 (CN)
(74) Representative: Gong, Jinping
     CocreateIP
     Neumarkter Straße 21
     81673 München (DE)

(54)  POSITIVE ELECTRODE SHEET, BATTERY CELL, BATTERY, AND ELECTRIC DEVICE

(57)     A positive electrode sheet, a battery cell, a battery, and an electric device relate to the technical field of batteries. The positive electrode sheet includes a positive electrode current collector, and a first positive electrode active material layer and a second positive electrode active material layer which are sequentially arranged on the surface of the current collector. The lattice volume shrinkage of a first positive electrode active material is greater than that of a second positive electrode active material, and the mass percentage of a binder in the first positive electrode active material layer is 0.8 wt% to 1.5 wt%. By limiting the upper limit of the amount of the binder in the first positive electrode active material layer, the first positive electrode active material layer would not be allowed to include more other components such as a positive electrode active material, and the overall energy density and specific capacity of the battery cell or the battery are met. Additionally, the lower limit of the amount of the binder in the first positive electrode active material layer can also be limited, thereby improving the binding performance between the first positive electrode active material layer and the positive electrode current collector and between the first positive electrode active material layer and the second positive electrode active material layer, and preventing a coating from falling off.

FIG. 4

EP 4 742 315 A1

**Description**

CROSS REFERENCE

The present application claims priority to Chinese Patent Application No. 202310882443.7, filed on July 18, 2023 and entitled "Positive Electrode Sheet, Battery Cell, Battery, and Electric Device", which is incorporated herein by reference in its entirety.

TECHNICAL FIELD

The present application relates to the technical field of batteries, and in particular, to a positive electrode sheet, a battery cell, a battery, and an electric device.

BACKGROUND

The positive electrode active material with high energy density such as a ternary material has the characteristics of low cost, long life, insufficient safety performance and controllability of the production process, and the like, and the positive electrode active material with low energy density such as lithium manganese phosphate has the characteristic of high safety performance, so that the combined use of the positive electrode active material with high energy density and the positive electrode active material with low energy density is beneficial to exerting the advantages of different positive electrode active materials.

However, due to the difference in electrochemical performance of the two positive electrode active materials, if the positive electrode active material layer is prepared by directly physically mixing the two positive electrode active materials, the battery cell or the battery will be rapidly degraded in the early stage of cycling. When the two positive electrode active materials are separately coated to form two independent positive electrode active material layers, the binding effect between different positive electrode active material layers needs to be considered.

SUMMARY

In view of the above problems, provided in the present application are a positive electrode sheet, a battery cell, a battery, and an electric device, which can improve or avoid the detachment of the positive electrode active material and increase the energy density.

In a first aspect, provided in the present application is a positive electrode sheet, including a positive electrode current collector, and a first positive electrode active material layer and a second positive electrode active material layer which are sequentially arranged on the surface of the current collector, where the first positive electrode active material layer includes a first positive electrode active material and a binder, and the second positive electrode active material layer includes a second positive electrode active material. The lattice volume shrinkage of the first positive electrode active material is greater than that of the second positive electrode active material, and the mass percentage of a binder in the first positive electrode active material layer is 0.8 wt% to 1.5 wt%.

In the technical solutions of the embodiments of the present application, according to the positive electrode sheet in the present application, the first positive electrode active material layer formed by the first positive electrode active material with high lattice volume shrinkage is arranged between the positive electrode current collector and the second positive electrode active material layer, which can reduce the risk of particle detachment caused by the great volume change of the first positive electrode active material during cyclic deintercalation of the battery cell or the battery, effectively reduce the probability of cycling degradation, improve the cycling capability of the battery cell or the battery, and prolong the cycle life. When the mass percentage of the binder in the first positive electrode active material layer is 0.8 wt% to 1.5 wt%, the upper limit of the amount of the binder in the first positive electrode active material layer can be limited, so that the first positive electrode active material layer would not be allowed to include more other components such as a positive electrode active material, and the overall energy density and specific capacity of the battery cell or the battery are met. Additionally, the lower limit of the amount of the binder in the first positive electrode active material layer can also be limited, thereby improving the binding performance between the first positive electrode active material layer and the positive electrode current collector and between the first positive electrode active material layer and the second positive electrode active material layer, and preventing a coating from falling off.

In some embodiments, the first positive electrode active material layer includes 95.5 wt% to 97 wt% of the first positive electrode active material and 2.5 wt% to 3 wt% of a conductive agent. When the first positive electrode active material layer includes 95.5 wt% to 97 wt% of the first positive electrode active material and 2.5 wt% to 3 wt% of the conductive agent, the prepared battery or battery cell has high energy density and capacity.

In some embodiments, the positive electrode sheet meets the following condition: $0.3 < \frac{w1*P2}{w2*P1} < 16.5$, where w1 = mass of the first positive electrode active material / (mass of the first positive electrode active material + mass of the second positive electrode active material), w2 = mass of the second positive electrode active material / (mass of the first positive electrode active material + mass of the second positive electrode active material), P1 is the particle compaction density of the first positive electrode active material at 3T, and P2 is the particle compaction density of the second positive electrode active material at 3T. When the positive electrode sheet meets the following condition: $0.3 < \frac{w1*P2}{w2*P1} < 16.5$, the amounts of the two materials with different compaction densities can be limited within a certain range, the first positive electrode active material and the second positive electrode active material with high compaction density need to be selected to improve the overall compaction level of the positive electrode sheet, and their content needs to be maintained at a certain level to improve the electrical performance of the battery cell or the battery, thereby effectively increasing the energy density of the battery cell or the battery.

In some embodiments, $0.5 \leq w1 \leq 0.95$, and $0.05 \leq w2 \leq 0.5$. When $0.5 \leq w1 \leq 0.95$, and $0.05 \leq w2 \leq 0.5$, the electrical performance of the battery cell or the battery can be improved.

In some embodiments, $3\,g/cc \leq P1 \leq 4\,g/cc$, and $2\,g/cc \leq P2 \leq 2.5\,g/cc$. When $3\,g/cc \leq P1 \leq 4\,g/cc$, and $2\,g/cc \leq P2 \leq 2.5\,g/cc$, the overall compaction level of the positive electrode sheet can be improved.

In some embodiments, Dv50 of the first positive electrode active material is greater than Dv50 of the second positive electrode active material. The first positive electrode active material layer formed by the first positive electrode active material with a larger particle size is bonded to the positive electrode current collector, and the second positive electrode active material layer formed by the second positive electrode active material with a smaller particle size is bonded to the first positive electrode active material layer, so that the second positive electrode active material layer can enhance the adhesion effect of the first positive electrode active material layer, avoid or improve the detachment of the first positive electrode active material, and reduce the degradation risk of the battery cell or the battery.

In some embodiments, the first positive electrode active material contains Mn element and Ni element, and the positive electrode sheet meets the following condition: $0.02 < \frac{w(Mn)*H1}{w(Ni)*H2} < 18$, where w(Mn) is the mass percentage of the Mn element in the first positive electrode active material, w(Ni) is the mass percentage of the Ni element in the first positive electrode active material, H1 is the thickness of the first positive electrode active material layer, and H2 is the thickness of the second positive electrode active material layer. Since some positive electrode active materials with low energy density such as lithium manganese phosphate have relatively high water content due to the synthesis process problem and are difficult to remove completely, when the thickness of the second positive electrode active material layer is larger and the Ni content in the first positive electrode active material layer is higher, the side reaction that unremoved water in the positive electrode active material with low energy density such as lithium manganese phosphate reacts with electrolyte to generate hydrogen fluoride is more likely to occur. The hydrogen fluoride will corrode the ternary material with high energy density, causing the dissolution of transition metals and affecting the service life and cycling stability of the battery cell or the battery. When the positive electrode sheet meets $0.02 < \frac{w(Mn)*H1}{w(Ni)*H2} < 18$, the cost of the positive electrode sheet and the safety and cycling stability of the battery cell or the battery can be controlled.

In some embodiments, the first positive electrode active material contains Ni element and Co element, $2\,wt\% \leq w(Co) \leq 15\,wt\%$, and $20\,wt\% \leq w(Ni) \leq 55\,wt\%$, where w(Co) is the mass percentage of the Co element in the first positive electrode active material, and w(Ni) is the mass percentage of the Ni element in the first positive electrode active material. When $2\,wt\% \leq w(Co) \leq 15\,wt\%$, and $20\,wt\% \leq w(Ni) \leq 55\,wt\%$, the first positive electrode active material can have high energy density and good rate cycle performance.

In some embodiments, the positive electrode sheet meets the following condition: $0.02 < \frac{w(Co)}{w(Ni)} < 0.45$. Positive electrode active materials with different Ni contents have a great difference in performance. In the positive electrode active materials with the same Ni content, when the positive electrode sheet meets the following condition: $0.02 < \frac{w(Co)}{w(Ni)} < 0.45$, the cost can be reduced, the low-temperature performance can be improved, and the conductivity and rate performance of the positive electrode active material can be improved.

In some embodiments, the first positive electrode active material has a chemical formula of $Li_aNi_bCo_cM_{1d-}M_{2e}O_fR_g$, where $0.75 \leq a \leq 1.2$, $0.2 < b < 0.8$, $0 < c < 0.4$, $0 < d < 1$, $0 \leq e \leq 0.2$, $1 \leq f \leq 2.5$, $0 \leq g \leq 1$, and $f + g \leq 3$; and $M_1$ is selected from Mn and/or Al, $M_2$ is selected from any one or more of Zr, Zn, Cu, Cr, Mg, Fe, V, Ti, Sr, Sb, Y, W, and Nb, and R is selected from any one or more of N, F, S, and Cl. The first positive electrode active material is a ternary material with low Ni content. The use of a ternary material with medium and low Ni content can improve safety performance while meeting the requirements of energy.

In some embodiments, the positive electrode active material is in a single-crystalline form. In a high-voltage working environment, high-nickel polycrystals are prone to phase transition during charging and discharging, which causes anisotropic lattice changes, resulting in increased polarization, degraded cycling stability, and capacity fading; meanwhile, the material suffers from grain boundary cracking, secondary particles undergo microcracking or fragmentation, and side reactions occur between the material and the electrolyte. The use of the first positive electrode active material in the single-crystalline form can alleviate the influence of lithium ion deintercalation on particle fragmentation and cracking, thereby better exerting the cycling stability and rate performance at a high voltage. Meanwhile, the first positive electrode active material in the single-crystalline form with medium and low nickel content reduces the risk of side reactions with the electrolyte due to particle cracking, and effectively improves the gas production risk of the battery cell or the battery.

In some embodiments, the second positive electrode active material has a chemical formula of $Li_{1+x}Mn_{1-y}A_yP_{1-z}E_zO_4$, where $-0.1 \leq x \leq 0.1$, $0.001 \leq y \leq 0.5$, and $0.001 \leq z \leq 0.1$; and A is selected from any one or more of Zn, Al, Na, K, Mg, Mo, W, Ti, V, Zr, Fe, Ni, Co, Ga, Sn, Sb, Nb, and Ge, and E is selected from any one or more of B, Si, N, S, F, Cl, and Br. When the second positive electrode active material is a lithium manganese phosphate material and $0.001 \leq y \leq 0.5$, the cycling stability of the battery cell or the battery can be improved, and the voltage platform can be improved, thereby increasing the energy density of the battery cell or the battery.

In a second aspect, provided in the present application is a battery cell, including the positive electrode sheet in the above embodiment.

In a third aspect, provided in the present application is a battery, including the battery cell in the above embodiment.

In a fourth aspect, provided in the present application is an electric device, including the battery cell or the battery in the above embodiments, where the battery cell or the battery is configured to provide electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

DESCRIPTION OF DRAWINGS

Various other advantages and benefits will become clear to a person of ordinary skill in the art upon reading the detailed description of the preferred embodiments below. The accompanying drawings are used only for the purpose of illustrating the preferred embodiments and are not to be construed as limitations on the present application. Moreover, the same reference numerals are used to denote the same components throughout the accompanying drawings. In the accompanying drawings:

FIG. 1 is a schematic diagram of a structure of a vehicle according to some embodiments of the present application;

FIG. 2 is a schematic diagram of an exploded structure of a battery according to some embodiments of the present application;

FIG. 3 is a schematic diagram of an exploded structure of a battery cell according to some embodiments of the present application; and

FIG. 4 is a cross-sectional view of a positive electrode sheet according to some embodiments of the present application.

Reference numerals in specific embodiments are as follows:

1000-vehicle; 100-battery; 200-controller; 300-motor;

10-box; 11-first part; 12-second part;

20-battery cell; 21-end cap; 22-case; 23-electrode assembly;

30-positive electrode sheet; 31-positive electrode current collector; 32-first positive electrode active material layer; and 33-second positive electrode active material layer.

DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

The positive electrode active material with high energy density such as a ternary material has the characteristics of low cost, long life, insufficient safety performance and controllability of the production process, and the like, and the positive electrode active material with low energy density such as lithium manganese phosphate has the characteristic of high safety performance, so that the combined use of the positive electrode active material with high energy density and the positive electrode active material with low energy density is beneficial to exerting the advantages of different positive electrode active materials.

However, due to the difference in electrochemical performance of the two positive electrode active materials, if the positive electrode active material layer is prepared by directly physically mixing the two positive electrode active materials, the battery cell or the battery will be rapidly degraded in the early stage of cycling. When the two positive electrode active materials are separately coated to form two independent positive electrode active material layers, the binding effect between different positive electrode active material layers needs to be considered.

Based on the above consideration, in order to improve or avoid the detachment of the positive electrode active material, according to the positive electrode sheet in the present application, the first positive electrode active material layer formed by the first positive electrode active material with high lattice volume shrinkage is arranged between the positive electrode current collector and the second positive electrode active material layer, which can reduce the risk of particle detachment caused by the great volume change of the first positive electrode active material during cyclic deintercalation of the battery cell or the battery, effectively reduce the probability of cycling degradation, improve the cycling capability of the battery cell or the battery, and prolong the cycle life. When the mass percentage of the binder in the first positive electrode active material layer is selected to be 0.8 wt% to 1.5 wt%, the upper limit of the amount of the binder in the first positive electrode active material layer can be limited, so that the first positive electrode active material layer would not be allowed to include more other components such as a positive electrode active material, and the overall energy density and specific capacity of the battery cell or the battery are met. Additionally, the lower limit of the amount of the binder in the first positive electrode active material layer can also be limited, thereby improving the binding performance between the first positive electrode active material layer and the positive electrode current collector and between the first positive electrode active material layer and the second positive electrode active material layer, and preventing a coating from falling off.

In addition, some positive electrode active materials with high energy density such as ternary materials and positive electrode active materials with low energy density such as lithium manganese phosphate have a great difference in particle size, where the particle size of the positive electrode active materials with high energy density such as ternary materials is an order of magnitude greater than that of the positive electrode active materials with low energy density such as lithium manganese phosphate. The two positive electrode active materials are coated in layers, the first positive electrode active material layer formed by the positive electrode active material with high energy density such as a ternary material is bonded to the positive electrode current collector, and the second positive electrode active material layer formed by the positive electrode active material with low energy density such as lithium manganese phosphate is bonded to the first positive electrode active material layer, so that the second positive electrode active material layer can achieve a coating effect on the positive electrode active material with large particles on the surface of the first positive electrode active material layer.

Meanwhile, the first positive electrode active material layer is bonded to the positive electrode current collector, and the second positive electrode active material layer is bonded to the first positive electrode active material layer, so that during cold pressing of the electrode sheet, the positive electrode active material with small particles in the second positive electrode active material is directly in contact with a cold pressing roller, thereby avoiding the direct action of the cold pressing roller on the positive electrode active material with large particles in the first positive electrode active material, and reducing the risk of cold pressing damage to the positive electrode active material with large particles in the first positive electrode active material.

In addition, since the first positive electrode active material with high lattice volume shrinkage may be a ternary material and the ternary material is prone to side reactions when in contact with water, hydrogen fluoride and electrolyte, the layered coating is adopted, the first positive electrode active material layer formed by the positive electrode active material with high energy density such as a ternary material is bonded to the positive electrode current collector, and the second positive electrode active material layer formed by the positive electrode active material with low energy density such as lithium manganese phosphate is bonded to the first positive electrode active material layer, so that the large-area side reactions between the first positive electrode active material and the water, the hydrogen fluoride and the electrolyte can be avoided, and the electrochemical performance of the battery cell or the battery can be optimized.

The battery mentioned in the embodiments of the present application refers to a single physical module including a plurality of battery cells to provide a higher voltage and capacity. The battery may be in the form of a battery module or a battery pack. The battery generally includes a battery box configured to package a plurality of battery cells. The battery box can prevent liquids or other foreign objects from affecting the charging or discharging of the battery cells.

Here, each battery cell is a secondary battery, or may be a lithium-ion battery or a lithium-sulfur battery, but is not limited thereto. The battery cell may be in the shape of a cylinder, a flat body, a cuboid, or the like. The battery cell is generally classified into three types according to a packaging manner: a cylindrical battery cell, a square battery cell, and a pouch battery cell.

The battery cell includes an electrode assembly and an electrolyte. The electrode assembly includes a positive electrode sheet, a negative electrode sheet, and a separator. Working of the battery cell mainly relies on migration of metal ions between the positive electrode sheet and the negative electrode sheet. The positive electrode sheet includes a positive electrode current collector and a positive electrode active material layer. The positive electrode active material layer is coated on the surface of the positive electrode current collector. The positive electrode current collector not coated with the positive electrode active material layer protrudes from the positive electrode current collector coated with the positive electrode active material layer, and the positive electrode current collector not coated with the positive electrode active material layer is a positive electrode tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on the surface of the negative electrode current collector. The negative electrode current collector not coated with the negative electrode active material layer protrudes from the negative electrode current collector coated with the negative electrode active material layer, and the negative electrode current collector not coated with the negative electrode active material layer is a negative electrode tab. The negative electrode current collector may be made of copper. To ensure that a large current passes through without any fusing, a plurality of positive electrode tabs are provided and stacked together, and a plurality of negative electrode tabs are provided and stacked together. The separator may be made of polypropylene (PP), polyethylene (PE), or the like. In addition, the electrode assembly may be a wound structure or a stacked structure, and the embodiments of the present application are not limited thereto.

The battery cell further includes a current collecting member, where the current collecting member is configured to electrically connect the tab and the electrode terminal of the battery cell, so as to transmit electric energy from the electrode assembly to the electrode terminal and then transmit it to the outside of the battery cell through the electrode terminal. A plurality of battery cells are electrically connected through a busbar component to achieve series connection, parallel connection, or series-parallel connection between the plurality of battery cells.

The battery further includes a sampling terminal and a battery management system, where the sampling terminal is connected to the busbar component and is configured to collect information of the battery cell, such as a voltage or a temperature. The sampling terminal transmits the collected information of the battery cell to the battery management system, and when detecting that the information of the battery cell exceeds a normal range, the battery management system limits the output power of the battery to achieve safety protection.

It can be understood that the electric device to which the battery used is applicable described in the embodiments of the present application may be in various forms, for example, a mobile phone, a portable device, a notebook computer, a battery powered vehicle, an electric vehicle, a ship, a space vehicle, an electric toy, and an electric tool. For example, the space vehicle includes an airplane, a rocket, a space shuttle, and a spacecraft; the electric toy includes a fixed or movable electric toy, for example, a game console, an electric vehicle toy, an electric ship toy, and an electric airplane toy; and the electric tool includes an electric tool for metal cutting, an electric tool for grinding, an electric tool for assembly, and an electric tool for railway, for example, an electric drill, an electric grinder, an electric wrench, an electric screwdriver, an electric hammer, an electric impact drill, a concrete vibrator, and an electric planer.

The battery cell and the battery described in the embodiments of the present application are not only limited to being applicable to the electric devices described above, but may be applied to all electric devices using battery cells and batteries. For brevity of description, the following embodiments are described by using an electric vehicle as an example.

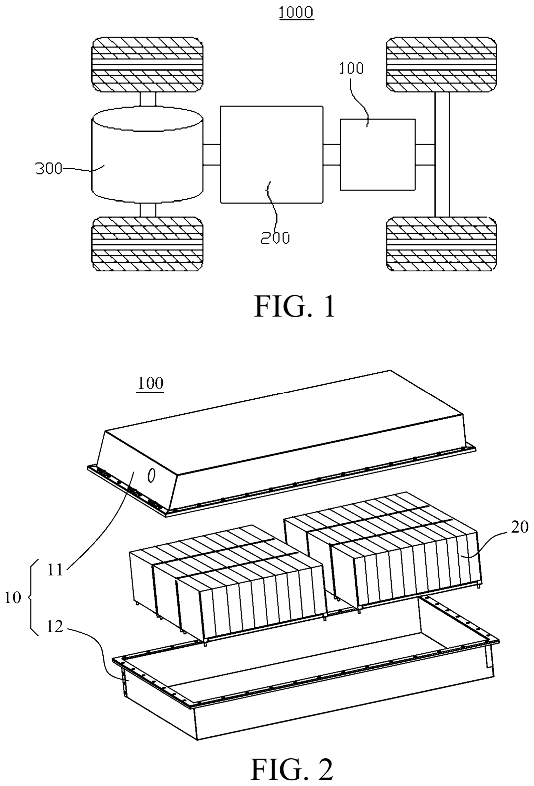

Reference is made to FIG. 1. FIG. 1 is a schematic structural diagram of a vehicle according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be used to power the vehicle 1000, for example, the battery 100 may be used as an operating power source of the vehicle 1000. The vehicle 1000 may further include a controller 200 and a motor 300, where the controller 200 is used to control the battery 100 to power the motor 300, for example, for a working power requirement of the vehicle 1000 during starting, navigating, and driving.

In some embodiments of the present application, the battery 100 may be used not only as an operating power source for the vehicle 1000, but also as a driving power source for the vehicle 1000, instead of or partially instead of fuel or natural gas to provide driving power for the vehicle 1000.

Reference is made to FIG. 2. FIG. 2 is an exploded view of a battery according to some embodiments of the present application. The battery 100 includes a box 10 and a battery cell 20. The battery cell 20 is accommodated in the box 10. Here, the box 10 is used for providing an accommodation space for the battery cell 20, and the box 10 may have various structures. In some embodiments, the box 10 may include a first part 11 and a second part 12, where the first part 11 and the second part 12 fit to each other to define an accommodation space for accommodating the battery cell 20. The second part 12 may be a hollow structure with an opening at one end, the first part 11 may be a plate-shaped structure, and the first part 11 covers an opening side of the second part 12, so that the first part 11 and the second part 12 jointly define the accommodation space. The first part 11 and the second part 12 each may be a hollow structure with an opening at one end, and an opening side of the first part 11 covers an opening side of the second part 12. Certainly, the box 10 formed by the first part 11 and the second part 12 may be in various shapes such as a cylinder, a cuboid, and the like.

In the battery 100, a plurality of battery cells 20 may be provided, and the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 100 may further include other structures. For example, the battery 100 may further include a busbar component for implementing an electrical connection between the plurality of battery cells 20.

Here, each battery cell 20 is a secondary battery, or may be a lithium-ion battery, a lithium-sulfur battery, a sodium-ion battery, or a magnesium-ion battery, but is not limited thereto. The battery cell 20 may be in the shape of a cylinder, a flat body, a cuboid, or the like.

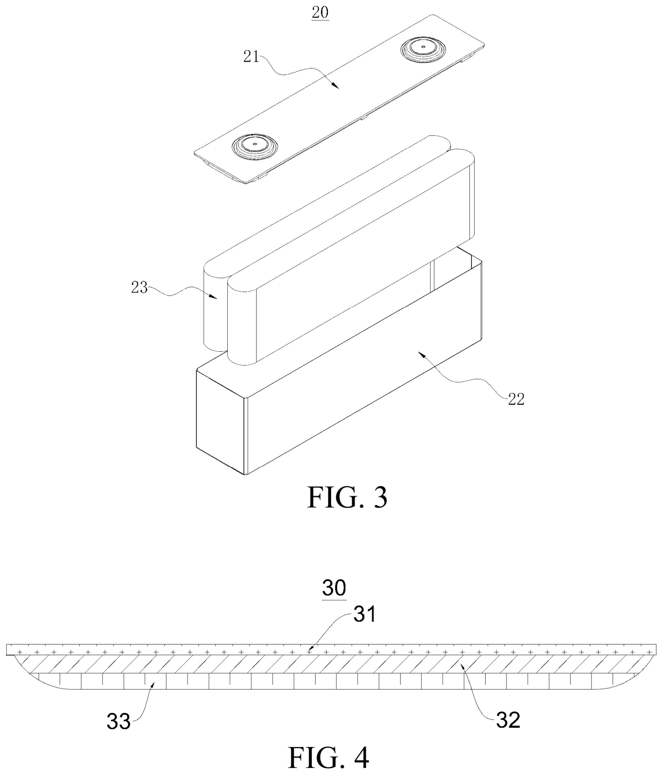

Reference is made to FIG. 3. FIG. 3 is a schematic diagram of an exploded structure of a first battery cell according to some embodiments of the present application. The battery cell 20 refers to a minimum unit constituting a battery. As shown in FIG. 3, the battery cell 20 includes an end cap 21, a case 22, an electrode assembly 23, and other functional components.

The end cap 21 is a component that covers the opening of the case 22 to insulate an internal environment of the battery cell 20 from an external environment. Without limitation, the shape of the end cap 21 may adapt to the shape of the case 22 to fit the case 22. Optionally, the end cap 21 may be made of a material with certain hardness and strength (e.g., aluminum alloy). As such, the end cap 21 is less prone to deformation under compressive impact, thereby enabling the battery cell 20 to have higher structural strength and improved safety performance. The end cap 21 may be provided with a functional component such as an electrode terminal. The electrode terminal may be used to be electrically connected to the electrode assembly 23 for outputting electric energy from or inputting electric energy into the battery cell 20. In some embodiments, a pressure relief mechanism for relieving internal pressure may be further disposed on the end cap 21 when the internal pressure or temperature of the battery cell 20 reaches a threshold. The end cap 21 may be made of various materials, such as copper, iron, aluminum, stainless steel, aluminum alloy, plastic, etc. The embodiments of the present application impose no special limitations thereto. In some embodiments, an insulation piece may be further provided on an inner side of the end cap 21, and the insulation piece may be used to isolate an electrical connection component in the case 22 from the end cap 21 to reduce the risk of a short circuit. For example, the insulation member may be plastic, rubber, etc.

The case 22 is a component configured to cooperate with the end cap 21 to form an internal environment of the battery cell 20, where the formed internal environment may be used to accommodate the electrode assembly 23, an electrolyte, and other components. The case 22 and the end cap 21 may be separate members, and an opening may be provided in the case 22, and the inner environment of the battery cell 20 may be formed by closing the end cap 21 at the opening. Without limitation, the end cap 21 and the case 22 may also be integrated. Specifically, the end cap 21 and the case 22 may form a joint connection surface before other components are fitted into the case, and then the end cap 21 is enabled to cover the case 22 when an interior of the case 22 needs to be enclosed. The case 22 may be in various shapes and various dimensions, such as a cuboid, a cylinder, a hexagonal prism, and the like. Specifically, the shape of the case 22 may be determined based on a specific shape and dimension of the electrode assembly 23. The case 22 may be made of various materials, such as copper, iron, aluminum, stainless steel, aluminum alloy, plastic, and the like. This is not specially limited in the embodiments of the present application.

The electrode assembly 23 is a component in the battery cell 20 in which an electrochemical reaction occurs. The case 22 may include one or more electrode assemblies 23. The electrode assembly 23 is mainly formed by winding or stacking a positive electrode sheet and a negative electrode sheet, and a separator is generally disposed between the positive electrode sheet and the negative electrode sheet. Parts of the positive electrode sheet and the negative electrode sheet with an active material constitute a main body of the electrode assembly, and parts of the positive electrode sheet and the negative electrode sheet with no active material each constitute a tab. The positive electrode tab and negative electrode tab may both be located at one end of the main body portion or be located at two ends of the main body portion respectively. During charge-discharge of a battery, a positive electrode active substance and a negative electrode active substance react with the electrolyte, and the tab is connected to an electrode terminal to form a current circuit.

According to some embodiments of the present application, reference is made to FIG. 4. FIG. 4 is a cross-sectional view of a positive electrode sheet 30 according to some embodiments of the present application.

The positive electrode sheet 30 includes a positive electrode current collector 31, and a first positive electrode active material layer 32 and a second positive electrode active material layer 33 which are sequentially arranged on the surface of the current collector, where the first positive electrode active material layer 32 includes a first positive electrode active material and a binder, and the second positive electrode active material layer 33 includes a second positive electrode active material. The lattice volume shrinkage of the first positive electrode active material is greater than that of the second positive electrode active material, and the mass percentage of a binder in the first positive electrode active material layer 32 is 0.8 wt% to 1.5 wt%.

The lattice volume shrinkage of the first positive electrode active material and the lattice volume shrinkage of the second positive electrode active material can be measured by the following method:

A pouch-type stacked battery is separately prepared from the first positive electrode active material or the second positive electrode active material, and is charged to 4.4 V according to $0.5C_0$ at 2.5-4.4 V in a constant temperature environment of 25°C, and then charged to a current of $\leq 0.05C_0$ at a constant voltage of 4.4 V; then the battery is disassembled to take out the positive electrode sheet; an XRD test is performed, so that the values of a and c axes (unit cell parameters of the material) required for the unit cell volume of the material in a fully charged state can be obtained through XRD data and RietVeld software refinement, where $V_{full} = a^2 \times c \times \sin 120°$; and the condition of a fresh positive electrode sheet is confirmed using the same process to obtain $V_{fresh}$, where the lattice volume shrinkage $C_1 = (V_{fresh} - V_{full})/V_{fresh}$.

As an example, the mass percentage of the binder in the first positive electrode active material layer 32 may be 0.8 wt%, 0.9 wt%, 1 wt%, 1.1 wt%, 1.2 wt%, 1.3 wt%, 1.4 wt%, or 1.5 wt%.

When the first positive electrode active material layer 32 includes the first positive electrode active material, the conductive agent, and the binder, the mass percentage of the binder in the first positive electrode active material layer 32 = m (the binder)/(m (the first positive electrode active material) + m (the conductive agent) + m (the binder)),

where m (the binder) is the mass of the binder in the first positive electrode active material layer 32, m (the first positive electrode active material) is the mass of the first positive electrode active material in the first positive electrode active material layer 32, and m (the conductive agent) is the mass of the conductive agent in the first positive electrode active material layer 32.

According to the positive electrode sheet 30 in the present application, the first positive electrode active material layer 32 formed by the first positive electrode active material with high lattice volume shrinkage is arranged between the positive electrode current collector 31 and the second positive electrode active material layer 33, which can reduce the risk of particle detachment caused by the great volume change of the first positive electrode active material during cyclic deintercalation of the battery cell or the battery, effectively reduce the probability of cycling degradation, improve the cycling capability of the battery cell or the battery, and prolong the cycle life. When the mass percentage of the binder in the first positive electrode active material layer 32 is 0.8 wt% to 1.5 wt%, the upper limit of the amount of the binder in the first positive electrode active material layer 32 can be limited, so that the first positive electrode active material layer 32 would not be allowed to include more other components such as a positive electrode active material, and the overall energy density and specific capacity of the battery cell or the battery are met. Additionally, the lower limit of the amount of the binder in the first positive electrode active material layer 32 can also be limited, thereby improving the binding performance between the first positive electrode active material layer 32 and the positive electrode current collector 31 and between the first positive electrode active material layer 32 and the second positive electrode active material layer 33, and preventing a coating from falling off.

Optionally, the lattice volume shrinkage of the first positive electrode active material is 2% to 4%, and the lattice volume shrinkage of the second positive electrode active material is 6% to 10%.

According to some embodiments of the present application, optionally, the first positive electrode active material layer 32 includes 95.5 wt% to 97 wt% of the first positive electrode active material and 2.5 wt% to 3 wt% of a conductive agent.

As an example, the first positive electrode active material layer 32 may include 95.5 wt%, 95.6 wt%, 95.7 wt%, 95.8 wt%, 95.9 wt%, 96 wt%, 96.1 wt%, 96.2 wt%, 96.3 wt%, 96.4 wt%, 96.5 wt%, 96.6 wt%, 96.7 wt%, 96.8 wt%, 96.9 wt%, or 97 wt% of the first positive electrode active material, and 2.5 wt%, 2.6 wt%, 2.7 wt%, 2.8 wt%, 2.9 wt%, or 3 wt% of the conductive agent.

When the first positive electrode active material layer 32 includes 95.5 wt% to 97 wt% of the first positive electrode active material and 2.5 wt% to 3 wt% of the conductive agent, the prepared battery or battery cell has high energy density and capacity.

According to some embodiments of the present application, optionally, the positive electrode sheet 30 meets the following condition: $0.3 < \dfrac{w1*P2}{w2*P1} < 16.5$, where w1 = mass of the first positive electrode active material / (mass of the first positive electrode active material + mass of the second positive electrode active material), w2 = mass of the second positive electrode active material / (mass of the first positive electrode active material + mass of the second positive electrode active material), P1 is the particle compaction density of the first positive electrode active material at 3T, and P2 is the particle compaction density of the second positive electrode active material at 3T.

As an example, the value of $\dfrac{w1*P2}{w2*P1}$ may be 0.32, 0.35, 0.38, 0.4, 0.5, 0.6, 0.7, 0.8, 0.9, 1, 2, 3, 4, 5, 6, 7, 8, 9, 10, 11, 12, 13, 14, 15, 16, or 16.5.

It should be noted that the method for detecting the particle compaction density is not limited in the present application. Provided in the embodiments of the present application is a method for detecting the particle compaction density.

A specific amount of powder is placed in a dedicated compaction die, the die is placed on a compaction density instrument, a pressure of 4T is set, the thickness of the powder under the pressure of 4T is read on this device, and the compaction density is calculated according to density = mass/volume.

When the positive electrode sheet 30 meets the following condition: $0.3 < \dfrac{w1*P2}{w2*P1} < 16.5$, the amounts of the

EP 4 742 315 A1

two materials with different compaction densities can be limited within a certain range, the first positive electrode active material and the second positive electrode active material with high compaction density need to be selected to improve the overall compaction level of the positive electrode sheet 30, and their content needs to be maintained at a certain level to improve the electrical performance of the battery cell or the battery, thereby effectively increasing the energy density of the battery cell or the battery.

According to some embodiments of the present application, optionally, $0.5 \leq w1 \leq 0.95$, and $0.05 \leq w2 \leq 0.5$.

As an example, the value of w1 may be 0.5, 0.55, 0.6, 0.65, 0.7, 0.75, 0.8, 0.85, 0.9, or 0.95; and the value of w2 may be 0.05, 0.1, 0.15, 0.2, 0.25, 0.3, 0.35, 0.4, 0.45, or 0.5.

When $0.5 \leq w1 \leq 0.95$, and $0.05 \leq w2 \leq 0.5$, the electrical performance of the battery cell or the battery can be improved.

Optionally, $0.6 \leq w1 \leq 0.8$, and $0.2 \leq w2 \leq 0.4$.

According to some embodiments of the present application, optionally, $3 \text{ g/cc} \leq P1 \leq 4 \text{ g/cc}$, and $2 \text{ g/cc} \leq P2 \leq 2.5 \text{ g/cc}$.

As an example, the value of P1 may be 3 g/cc, 3.1 g/cc, 3.2 g/cc, 3.3 g/cc, 3.4 g/cc, 3.5 g/cc, 3.6 g/cc, 3.7 g/cc, 3.8 g/cc, 3.9 g/cc, or 4 g/cc.

The value of P2 may be 2 g/cc, 2.1 g/cc, 2.2 g/cc, 2.3 g/cc, 2.4 g/cc, or 2.5 g/cc.

When $3 \text{ g/cc} \leq P1 \leq 4 \text{ g/cc}$, and $2 \text{ g/cc} \leq P2 \leq 2.5 \text{ g/cc}$, the overall compaction level of the positive electrode sheet 30 can be improved.

According to some embodiments of the present application, optionally, Dv50 of the first positive electrode active material is greater than Dv50 of the second positive electrode active material.

The first positive electrode active material layer 32 formed by the first positive electrode active material with a larger particle size is bonded to the positive electrode current collector 31, and the second positive electrode active material layer 33 formed by the second positive electrode active material with a smaller particle size is bonded to the first positive electrode active material layer 32, so that the second positive electrode active material layer 33 can enhance the adhesion effect of the first positive electrode active material layer 32, avoid or improve the detachment of the first positive electrode active material, and reduce the degradation risk of the battery cell or the battery.

Optionally, the Dv50 of the first positive electrode active material is 3 $\mu$m to 5 $\mu$m, and the Dv50 of the second positive electrode active material is 0.5 $\mu$m to 1.2 $\mu$m.

According to some embodiments of the present application, optionally, the first positive electrode active material contains Mn element and Ni element, and the positive electrode sheet 30 meets the following condition:

$$0.02 < \frac{w(Mn)*H1}{w(Ni)*H2} < 18,$$

where w(Mn) is the mass percentage of the Mn element in the first positive electrode active material, w(Ni) is the mass percentage of the Ni element in the first positive electrode active material, H1 is the thickness of the first positive electrode active material layer 32, and H2 is the thickness of the second positive electrode active material layer 33.

As an example, the value of $\frac{w(Mn)*H1}{w(Ni)*H2}$ may be 0.025, 0.03, 0.05, 0.08, 0.1, 0.2, 0.5, 0.8, 1, 2, 3, 4, 5, 6, 7, 8, 9, 10, 11, 12, 13, 14, 15, 16, 17, 17.5, or 17.8.

Since some positive electrode active materials with low energy density such as lithium manganese phosphate have relatively high water content due to the synthesis process problem and are difficult to remove completely, when the thickness of the second positive electrode active material layer 33 is larger and the Ni content in the first positive electrode active material layer 32 is higher, the side reaction that unremoved water in the positive electrode active material with low energy density such as lithium manganese phosphate reacts with electrolyte to generate hydrogen fluoride is more likely to occur. The hydrogen fluoride will corrode the ternary material with high energy density, causing the dissolution of transition metals and affecting the service life and cycling stability of the battery cell or the battery. When the positive electrode sheet 30 meets $0.02 < \frac{w(Mn)*H1}{w(Ni)*H2} < 18$, the cost of the positive electrode sheet 30 and the safety and cycle stability of the battery cell or the battery can be controlled.

Optionally, $5 \text{ wt\%} \leq w(Ni) \leq 25 \text{ wt\%}$, and $20 \text{ wt\%} \leq w(Ni) \leq 55 \text{ wt\%}$.

Optionally, $20 \mu\text{m} \leq H1 \leq 70 \mu\text{m}$, and $5 \mu\text{m} \leq H2 \leq 60 \mu\text{m}$.

Optionally, $25 \mu\text{m} \leq H1 \leq 55 \mu\text{m}$, and $20 \mu\text{m} \leq H2 \leq 50 \mu\text{m}$.

Optionally, the thickness of the positive electrode current collector 31 is 10 $\mu$m to 15 $\mu$m.

Optionally, the thickness of the positive electrode current collector 31 is 13 $\mu$m.

According to some embodiments of the present application, optionally, the first positive electrode active material contains Ni element and Co element, 2 wt% ≤ w(Co) ≤ 15 wt%, and 20 wt% ≤ w(Ni) ≤ 55 wt%; where w(Co) is the mass percentage of the Co element in the first positive electrode active material, and w(Ni) is the mass percentage of the Ni element in the first positive electrode active material.

As an example, the value of w(Co) may be 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, or 15 wt%.

The value of w(Ni) may be 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, or 55 wt%.

When 2 wt% ≤ w(Co) ≤ 15 wt%, and 20 wt% ≤ w(Ni) ≤ 55 wt%, the first positive electrode active material can have high energy density and good rate cycle performance.

Optionally, 3 wt% ≤ w(Co) ≤ 12.5 wt%, and 25 wt% ≤ w(Ni) ≤ 50 wt%.

Optionally, 30 wt% ≤ w(Ni) ≤ 45 wt%.

Optionally, 30 wt% ≤ w(Ni) ≤ 40 wt%.

According to some embodiments of the present application, optionally, the positive electrode sheet 30 meets the following condition: $0.02 < \frac{w(Co)}{w(Ni)} < 0.45$.

As an example, the value of w(Co)/w(Ni) may be 0.025, 0.03, 0.05, 0.08, 0.1, 0.2, 0.3, 0.4, 0.42, or 0.44.

Positive electrode active materials with different Ni contents have a great difference in performance. In the positive electrode active materials with the same Ni content, when the positive electrode sheet 30 meets the following condition: $0.02 < \frac{w(Co)}{w(Ni)} < 0.45$, the cost can be reduced, the low-temperature performance can be improved, and the conductivity and rate performance of the positive electrode active material can be improved.

Optionally, $0.025 < \frac{w(Co)}{w(Ni)} < 0.435$.

Optionally, $0.032 < \frac{w(Co)}{w(Ni)} < 0.405$.

According to some embodiments of the present application, optionally, the first positive electrode active material has a chemical formula of $Li_aNi_bCo_cM_{1d}M_{2e}O_fR_g$, where $0.75 ≤ a ≤ 1.2$, $0.2 < b < 0.8$, $0 < c < 0.4$, $0 < d < 1$, $0 ≤ e ≤ 0.2$, $1 ≤ f ≤ 2.5$, $0 ≤ g ≤ 1$, and $f + g ≤ 3$; and $M_1$ is selected from Mn and/or Al, $M_2$ is selected from any one or more of Zr, Zn, Cu, Cr, Mg, Fe, V, Ti, Sr, Sb, Y, W, and Nb, and R is selected from any one or more of N, F, S, and Cl.

The first positive electrode active material is a ternary material with low Ni content. The use of a ternary material with medium and low Ni content can improve safety performance while meeting the requirements of energy.

According to some embodiments of the present application, optionally, the first positive electrode active material is in a single-crystalline form.

In a high-voltage working environment, high-nickel polycrystals are prone to phase transition during charging and discharging, which causes anisotropic lattice changes, resulting in increased polarization, degraded cycling stability, and capacity fading; meanwhile, the material suffers from grain boundary cracking, secondary particles undergo microcracking or fragmentation, and side reactions occur between the material and the electrolyte. The use of the first positive electrode active material in the single-crystalline form can alleviate the influence of lithium ion deintercalation on particle fragmentation and cracking, thereby better exerting the cycling stability and rate performance at a high voltage. Meanwhile, the first positive electrode active material in the single-crystalline form with medium and low nickel content reduces the risk of side reactions with the electrolyte due to particle cracking, and effectively improves the gas production risk of the battery cell or the battery.

According to some embodiments of the present application, optionally, the second positive electrode active material has a chemical formula of $Li_{1+x}Mn_{1-y}A_yP_{1-z}E_zO_4$, where $-0.1 ≤ x ≤ 0.1$, $0.001 ≤ y ≤ 0.5$, and $0.001 ≤ z ≤ 0.1$; and A is selected from any one or more of Zn, Al, Na, K, Mg, Mo, W, Ti, V, Zr, Fe, Ni, Co, Ga, Sn, Sb, Nb, and Ge, and E is selected from any one or more of B, Si, N, S, F, Cl, and Br.

When the second positive electrode active material is a lithium manganese phosphate material and $0.001 ≤ y ≤ 0.5$, the cycling stability of the battery cell or the battery can be improved, and the voltage platform can be improved, thereby increasing the energy density of the battery cell or the battery.

Optionally, $0.2 ≤ y ≤ 0.5$.

Optionally, the surface of the second positive electrode active material is provided with a coating layer, where the coating layer is made from pyrophosphate, phosphate, or carbon, and the number of coating layers is greater than or equal to 1.

Deintercalation and consumption of Li occur during charging and discharging of the battery, and the molar content of Li varies when the battery is discharged to different states. In the enumeration of the positive electrode material in the present application, the molar content of Li is an initial state of the material, i.e., a state before adding. The positive electrode material is applied to a battery system, and the molar content of Li changes after charging and discharging cycles.

In the enumeration of the positive electrode material in the present application, the molar content of O is only a theoretical state value, the molar content of oxygen changes due to the release of oxygen from a lattice, and the actual molar content of O fluctuates.

The following further describes a positive electrode sheet in the present application in detail with reference to the embodiments.

The parameters of the positive electrode sheets in Examples 1-14 and Comparative Examples 1-2 of the present application are shown in Tables 1-3.

Table 1 First set of parameters for positive electrode sheets in Examples 1-14 and Comparative examples 1-2

| Item | First positive electrode active material layer | | | | | Second positive electrode active material layer | |
| | First positive electrode active material | | | Conductive agent | Binder | Second positive electrode active material | |
| | Type | Content (wt%) | Lattice volume shrinkage (%) | Content (wt%) | Content (wt%) | Type | Lattice volume shrinkage (%) |
|---|---|---|---|---|---|---|---|
| Example 1 | $LiNi_{0.55}Co_{0.12}Mn_{0.33}O_2$ | 96.14 | 3 | 2.7 | 1.16 | $LiFe_{0.4}Mn_{0.6}PO_4$ | 8 |
| Example 2 | $LiNi_{0.55}Co_{0.12}Mn_{0.33}O_2$ | 96.49 | 3 | 2.71 | 0.8 | $LiFe_{0.4}Mn_{0.6}PO_4$ | 8 |
| Example 3 | $LiNi_{0.55}Co_{0.12}Mn_{0.33}O_2$ | 96.3 | 3 | 2.7 | 1 | $LiFe_{0.4}Mn_{0.6}PO_4$ | 8 |
| Example 4 | $LiNi_{0.55}Co_{0.12}Mn_{0.33}O_2$ | 96 | 3 | 2.7 | 1.3 | $LiFe_{0.4}Mn_{0.6}PO_4$ | 8 |
| Example 5 | $LiNi_{0.55}Co_{0.12}Mn_{0.33}O_2$ | 95.81 | 3 | 2.69 | 1.5 | $LiFe_{0.4}Mn_{0.6}PO_4$ | 8 |
| Comparative example 1 | $LiNi_{0.55}Co_{0.12}Mn_{0.33}O_2$ | 96.68 | 3 | 2.72 | 0.6 | $LiFe_{0.4}Mn_{0.6}PO_4$ | 8 |
| Comparative example 2 | $LiNi_{0.55}Co_{0.12}Mn_{0.33}O_2$ | 95.61 | 3 | 2.69 | 1.7 | $LiFe_{0.4}Mn_{0.6}PO_4$ | 8 |
| Example 6 | $LiNi_{0.55}Co_{0.12}Mn_{0.33}O_2$ | 96.14 | 3 | 2.7 | 1.16 | $LiFe_{0.4}Mn_{0.6}PO_4$ | 8 |
| Example 7 | $LiNi_{0.55}Co_{0.12}Mn_{0.33}O_2$ | 96.14 | 3 | 2.7 | 1.16 | $LiFe_{0.4}Mn_{0.6}PO_4$ | 8 |
| Example 8 | $LiNi_{0.55}Co_{0.12}Mn_{0.33}O_2$ | 96.14 | 3 | 2.7 | 1.16 | $LiFe_{0.4}Mn_{0.6}PO_4$ | 8 |
| Example 9 | $LiNi_{0.55}Co_{0.12}Mn_{0.33}O_2$ | 96.14 | 3 | 2.7 | 1.16 | $LiFe_{0.4}Mn_{0.6}PO_4$ | 8 |
| Example 10 | $LiNi_{0.55}Co_{0.12}Mn_{0.33}O_2$ | 96.14 | 3 | 2.7 | 1.16 | $LiFe_{0.4}Mn_{0.6}PO_4$ | 8 |
| Example 11 | $LiNi_{0.55}Co_{0.12}Mn_{0.33}O_2$ | 96.14 | 3 | 2.7 | 1.16 | $LiFe_{0.4}Mn_{0.6}PO_4$ | 8 |
| Example 12 | $LiNi_{0.55}Co_{0.05}Mn_{0.40}O_2$ | 96.14 | 2.7 | 2.7 | 1.16 | $LiFe_{0.4}Mn_{0.6}PO_4$ | 8 |
| Example 13 | $LiNi_{0.65}Co_{0.20}Mn_{0.15}O_2$ | 96.14 | 3.2 | 2.7 | 1.16 | $LiFe_{0.4}Mn_{0.6}PO_4$ | 8 |

(continued)

| Item | First positive electrode active material layer | | | | | Second positive electrode active material layer | |
|---|---|---|---|---|---|---|---|
| | First positive electrode active material | | | Conductive agent | Binder | Second positive electrode active material | |
| | Type | Content (wt%) | **Lattice volume** shrinkage (%) | Content (wt%) | Content (wt%) | Type | **Lattice** volume shrinkage (%) |
| Example 14 | $LiNi_{0.55}Co_{0.12}Mn_{0.33}O_2$ | 96.14 | 3 | 2.7 | 1.16 | $LiFe_{0.3}Mn_{0.7}PO_4$ | 7.8 |

Table 2 Second set of parameters for positive electrode sheets in Examples 1-14 and Comparative examples 1-2

| Item | First positive electrode active material layer | | Second positive electrode active material layer | | w1 | w2 | w1*P1/(w2 *P2) |
|---|---|---|---|---|---|---|---|
| | First positive electrode active material | | Second positive electrode active material | | | | |
| | P1 | Dv50 | P2 | Dv50 | | | |
| Example 1 | 3.35 | 4.1 | 2.33 | 0.95 | 70 % | 30 % | 3.35 |
| Example 2 | 3.35 | 4.1 | 2.33 | 0.95 | 70 % | 30 % | 3.35 |
| Example 3 | 3.35 | 4.1 | 2.33 | 0.95 | 70 % | 30 % | 3.35 |
| Example 4 | 3.35 | 4.1 | 2.33 | 0.95 | 70 % | 30 % | 3.35 |
| Example 5 | 3.35 | 4.1 | 2.33 | 0.95 | 70 % | 30 % | 3.35 |
| Comparative example 1 | 3.35 | 4.1 | 2.33 | 0.95 | 70 % | 30 % | 3.35 |
| Comparative example 2 | 3.35 | 4.1 | 2.33 | 0.95 | 70 % | 30 % | 3.35 |
| Example 6 | 3.35 | 4.1 | 2.33 | 0.95 | 70 % | 30 % | 3.35 |
| Example 7 | 3.35 | 4.1 | 2.33 | 0.95 | 70 % | 30 % | 3.35 |
| Example 8 | 3.35 | 4.1 | 2.33 | 0.95 | 70 % | 30 % | 3.35 |
| Example 9 | 3.35 | 4.1 | 2.33 | 0.95 | 70 % | 30 % | 3.35 |
| Example 10 | 3.35 | 4.1 | 2.33 | 0.95 | 70 % | 30 % | 3.35 |
| Example 11 | 3.35 | 4.1 | 2.33 | 0.95 | 70 % | 30 % | 3.35 |
| Example 12 | 3.33 | 4 | 2.33 | 0.95 | 70 % | 30 % | 3.33 |
| Example 13 | 3.36 | 7.5 | 2.33 | 0.95 | 70 % | 30 % | 3.36 |
| Example 14 | 3.35 | 4.1 | 2.31 | 0.98 | 70 % | 30 % | 3.38 |

Table 3 Third set of parameters for positive electrode sheets in Examples 1-14 and Comparative examples 1-2

| Item | First positive electrode active material layer | | | | Second positive electrode active material layer | w(Mn) *H1/(w( Ni) *H2) | w(Co)/ w(Ni) |
|---|---|---|---|---|---|---|---|
| | First positive electrode active material | | | H1 | H2 | | |
| | w(Mn) | w(Ni) | w(Co) | | | | |
| Example 1 | 19 | 33.5 | 7.5 | 40 | 30 | 0.76 | 0.22 |
| Example 2 | 19 | 33.5 | 7.5 | 40 | 30 | 0.76 | 0.22 |
| Example 3 | 19 | 33.5 | 7.5 | 40 | 30 | 0.76 | 0.22 |

(continued)

| Item | First positive electrode active material layer | | | | Second positive electrode active material layer | w(Mn) *H1/(w( Ni) *H2) | w(Co)/ w(Ni) |
|---|---|---|---|---|---|---|---|
| | First positive electrode active material | | | H1 | H2 | | |
| | w(Mn) | w(Ni) | w(Co) | | | | |
| Example 4 | 19 | 33.5 | 7.5 | 40 | 30 | 0.76 | 0.22 |
| Example 5 | 19 | 33.5 | 7.5 | 40 | 30 | 0.76 | 0.22 |
| Comparative example 1 | 19 | 33.5 | 7.5 | 40 | 30 | 0.76 | 0.22 |
| Comparative example 2 | 19 | 33.5 | 7.5 | 40 | 30 | 0.76 | 0.22 |
| Example 6 | 19 | 33.5 | 7.5 | 20 | 60 | 0.19 | 0.22 |
| Example 7 | 19 | 33.5 | 7.5 | 30 | 20 | 0.85 | 0.22 |
| Example 8 | 19 | 33.5 | 7.5 | 40 | 40 | 0.57 | 0.22 |
| Example 9 | 19 | 33.5 | 7.5 | 50 | 30 | 0.95 | 0.22 |
| Example 10 | 19 | 33.5 | 7.5 | 60 | 20 | 1.70 | 0.22 |
| Example 11 | 19 | 33.5 | 7.5 | 70 | 10 | 3.97 | 0.22 |
| Example 12 | 21.7 | 33.5 | 3.6 | 40 | 30 | 0.86 | 0.11 |
| Example 13 | 8.3 | 38.5 | 11.9 | 40 | 30 | 0.29 | 0.31 |
| Example 14 | 19 | 33.5 | 7.5 | 40 | 30 | 0.76 | 0.22 |

The first positive electrode active materials in Examples 1-14 and Comparative Examples 1-2 are all in a single-crystalline form. In addition, the conductive agents in the first positive electrode active material layers in Examples 1-14 and Comparative Examples 1-2 are all conductive carbon black, and the binders are all polyvinylidene fluoride.
The positive electrode sheets in Examples 1-14 and Comparative Examples 1-2 were prepared by the following method:

S1. Preparation of slurry for first positive electrode active material

A first positive electrode active material, conductive carbon black, and polyvinylidene fluoride were mixed to obtain a first mixture, and N-methylpyrrolidone was added to the first mixture and stirred uniformly to obtain a slurry for the first positive electrode active material, where the viscosity of the slurry for the first positive electrode active material was 3,000 mPa·s to 10,000 mPa·s.

S2. Preparation of slurry for second positive electrode active material

96.7 wt% of a second positive electrode active material, 0.4 wt% of conductive carbon black, and 2.9 wt% of polyvinylidene fluoride were mixed to obtain a second mixture, and N-methylpyrrolidone was added to the second mixture and stirred uniformly to obtain a slurry for the second positive electrode active material, where the viscosity of the slurry for the second positive electrode active material was 3,000 mPa·s to 10,000 mPa·s.

S3. Preparation of positive electrode sheet

The slurry for the first positive electrode active material was coated on the surface of an aluminum foil having a thickness of 13 μm, the slurry for the second positive electrode active material was coated on the surface of the slurry for the first positive electrode active material, and a positive electrode sheet was obtained by drying and cold pressing.

Method for determining content of element to be tested:

About 0.4 g of a dried positive electrode sheet or about 1 g of a wet positive electrode sheet (both are accurate to 0.0001 g) was placed in a 25 ml beaker, 2 ml to 5 ml of nitric acid was added, and the beaker was allowed to stand overnight;

then the beaker was placed on an electric heating plate and heated at about 100°C (an input voltage was adjusted by a voltage regulating transformer to control the temperature); after the positive electrode sheet was digested, 0.5 ml of perchloric acid was added, and the beaker was heated at about 140°C for digestion until white smoke was exhausted and residues should be white, otherwise, the nitric acid and the perchloric acid should be added again for repeated digestion; and finally 7% (referring to the volume percentage of acid, the same below) of hydrochloric acid was used for dissolution and extraction, the volume was adjusted to be appropriate according to the content of an element to be tested, and then the element was loaded on an ICP-OES test instrument for testing.

Test Example 1

The content of the elements to be tested in the positive electrode sheets in Examples 1-14 and Comparative Examples 1-2 was determined, the positive electrode sheets in Examples 1-14 and Comparative Examples 1-2 were prepared into a pouch-type stacked battery, and the bonding force of the positive electrode sheet, the capacity retention rate after 500 cycles, and the cell capacity for the pouch-type stacked battery were determined, where the results were as shown in Table 4.

The positive electrode sheets in Examples 1-14 and Comparative Examples 1-2 were prepared into the pouch-type stacked battery by the following method:

(1) Preparation of negative electrode sheet

Graphite, carboxymethyl cellulose sodium (CMC), styrene-butadiene rubber (SBR), and conductive carbon were added to a certain amount of deionized water, where the mass ratio of the graphite to the carboxymethyl cellulose sodium to the styrene-butadiene rubber to the conductive agent was $90 : 2 : 3 : 5$; they were stirred to obtain a uniform slurry; the viscosity was controlled to be 3,000-10,000 mPa·s; and the above slurry was coated on a copper foil and dried to obtain a negative electrode sheet.

(2) Preparation of pouch-type stacked battery

The prepared positive electrode sheet, negative electrode sheet and separator (polyethylene (PE) porous polymer film) were prepared into a corresponding battery cell according to a Z-type stacked structure; the battery cell was vacuum-dried in an environment at 170°C for 12 h; then the positive and negative electrode tabs were ultrasonically welded, where the positive electrode was an aluminum tab, the negative electrode was a copper tab, and the positive and negative electrode tabs were located on the same side of the battery cell; the battery cell after tab welding was placed in an aluminum plastic film of an appropriate size for top side sealing and packaging, where the top side sealing temperature was 145°C; the electrolyte (the electrolyte was 1 mol/L of LiPF$_6$/(ethylene carbonate (EC) + diethyl carbonate (DEC) + dimethyl carbonate (DMC)) (volume ratio of $1 : 1 : 1$) + 5 wt.% of fluoroethylene carbonate (FEC)) was injected; and a pouch-type stacked battery was obtained after standing, formation, aging, degassing, secondary sealing, and capacity test.

Method for determining binding force of positive electrode sheet:

An electrode sheet to be tested was taken, a test sample having a width of 30 mm and a length of 100-160 mm was cut out with a blade, and a dedicated double-sided adhesive tape having a width of 20 mm and a length of 90-150 mm was attached to a steel plate. The cut test sample of the electrode sheet was attached to the double-sided adhesive tape, with a test surface facing downward. A paper strip having a width equal to the width of the electrode sheet and a length greater than the length of the test sample by 80-200 mm was inserted below the electrode sheet and fixed with a crepe adhesive tape. A Sansi tensile testing machine was powered on, and when an indicator light was on, a limiting block was adjusted to a proper position. One end of the steel plate to which the tab was not attached was fixed with a lower clamp. The paper strip was folded upward and fixed with an upper clamp, and the position of the upper clamp was adjusted by using "up" and "down" buttons on a hand controller attached to the tensile testing machine to start tensile testing.

Method for determining capacity retention rate after 500 cycles:

The above prepared pouch-type stacked battery was charged to 4.4 V according to $0.33C_0$ at 2.5-4.4 V in a constant temperature environment of 25°C, then charged to a current of $\leq 0.05C_0$ at a constant voltage of 4.4 V, left to stand for 5 min, and then discharged to 2.5 V according to $0.33C_0$; the capacity was denoted as $C_n$($n = 1, 2, 3...$); and the above operation was repeated. The capacity retention rate after 500 cycles = $C_{500}/C_3$, where $C_3$ is the 3rd-cycle cell capacity, and $C_{500}$ is the 500th-cycle cell capacity.

Method for determining cell capacity:

The cell capacity is the 3rd-cycle cell capacity, denoted as $C_3$.

Table 4 Binding force of positive electrode sheets in Examples 1-14 and Comparative Examples 1-2 and performance of manufactured pouch-type stacked battery

| Item | Binding force (N) | Cell capacity (Ah) | Capacity retention rate after 500 cycles |
|---|---|---|---|
| Example 1 | 32.2 | 54.38 | 95.20% |
| Example 2 | 28.9 | 54.67 | 94.10% |
| Example 3 | 31.5 | 54.54 | 94.90% |
| Example 4 | 32.7 | 54.33 | 94.70% |
| Example 5 | 32.9 | 54.21 | 93.90% |
| Comparative example 1 | 26.9 | 54.96 | 86.40% |
| Comparative example 2 | 33.1 | 53.98 | 94.28% |
| Example 6 | 32.2 | 54.26 | 93.80% |
| Example 7 | 32.2 | 54.31 | 94.20% |
| Example 8 | 32.2 | 54.38 | 95.10% |
| Example 9 | 32.2 | 54.68 | 94.80% |
| Example 10 | 32.2 | 54.82 | 94.60% |
| Example 11 | 32.2 | 54.91 | 94.50% |
| Example 12 | 32.2 | 54.38 | 94.10% |
| Example 13 | 32.2 | 54.92 | 93.80% |
| Example 14 | 32.2 | 54.76 | 91.32% |

It can be seen from Table 4 that when the mass percentage of the binder in the first positive electrode active material layer is 0.8 wt% to 1.5 wt%, the binding force of the positive electrode sheet is 28.9 N to 32.9 N, the capacity of the prepared pouch-type stacked battery is 54.21 Ah to 54.92 Ah, and the capacity retention rate after 500 cycles at 25°C is 91.32% to 95.2%; when the mass percentage of the binder in the first positive electrode active material layer is less than 0.8 wt%, the binding force of the positive electrode sheet is only 26.9 N, and the capacity retention rate after 500 cycles at 25°C is only 86.4%; and when the mass percentage of the binder in the second positive electrode active material layer is greater than 1.5 wt%, the capacity of the prepared pouch-type stacked battery is only 53.98 Ah.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. **In** particular, the technical features mentioned in the embodiments may be combined in any manner provided that no structural conflict is present. The present application is not limited to the specific embodiments disclosed herein, but includes all technical solutions falling within the scope of the claims.

**Claims**

1.  A positive electrode sheet, comprising a positive electrode current collector, and a first positive electrode active material layer and a second positive electrode active material layer which are sequentially arranged on the surface of the current collector, wherein the first positive electrode active material layer comprises a first positive electrode active material and a binder, and the second positive electrode active material layer comprises a second positive electrode active material; and

the lattice volume shrinkage of the first positive electrode active material is greater than that of the second positive electrode active material, and the mass percentage of the binder in the first positive electrode active material layer is 0.8 wt% to 1.5 wt%.

2. The positive electrode sheet according to claim 1, wherein the first positive electrode active material layer comprises 95.5 wt% to 97 wt% of the first positive electrode active material and 2.5 wt% to 3 wt% of a conductive agent.

3. The positive electrode sheet according to claim 1 or 2, wherein the positive electrode sheet meets the following condition:

$$0.3 < \frac{w1*P2}{w2*P1} < 16.5,$$

wherein w1 = mass of the first positive electrode active material / (mass of the first positive electrode active material + mass of the second positive electrode active material), w2 = mass of the second positive electrode active material / (mass of the first positive electrode active material + mass of the second positive electrode active material), P1 is the particle compaction density of the first positive electrode active material at 3T, and P2 is the particle compaction density of the second positive electrode active material at 3T.

4. The positive electrode sheet according to claim 3, wherein $0.5 \leq w1 \leq 0.95$, and $0.05 \leq w2 \leq 0.5$.

5. The positive electrode sheet according to claim 3, wherein 3 g/cc $\leq$ P1 $\leq$ 4 g/cc, and 2 g/cc $\leq$ P2 $\leq$ 2.5 g/cc.

6. The positive electrode sheet according to claim 3, wherein Dv50 of the first positive electrode active material is greater than Dv50 of the second positive electrode active material.

7. The positive electrode sheet according to any one of claims 1 to 6, wherein the first positive electrode active material contains Mn element and Ni element, and the positive electrode sheet meets the following condition:

$$0.02 < \frac{w(Mn)*H1}{w(Ni)*H2} < 18,$$

wherein w(Mn) is the mass percentage of the Mn element in the first positive electrode active material, w(Ni) is the mass percentage of the Ni element in the first positive electrode active material, H1 is the thickness of the first positive electrode active material layer, and H2 is the thickness of the second positive electrode active material layer.

8. The positive electrode sheet according to any one of claims 1 to 7, wherein the first positive electrode active material contains Ni element and Co element, 2 wt% $\leq$ w(Co) $\leq$ 15 wt%, and 20 wt% $\leq$ w(Ni) $\leq$ 55 wt%, wherein w(Co) is the mass percentage of the Co element in the first positive electrode active material, and w(Ni) is the mass percentage of the Ni element in the first positive electrode active material.

9. The positive electrode sheet according to claim 8, wherein the positive electrode sheet meets the following condition:

$$0.02 < \frac{w(Co)}{w(Ni)} < 0.45.$$

10. The positive electrode sheet according to any one of claims 1 to 9, wherein the first positive electrode active material has a chemical formula of $Li_aNi_bCo_cM_{1d}M_{2e}O_fR_g$,

wherein $0.75 \leq a \leq 1.2$, $0.2 < b < 0.8$, $0 < c < 0.4$, $0 < d < 1$, $0 \leq e \leq 0.2$, $1 \leq f \leq 2.5$, $0 \leq g \leq 1$, and $f + g \leq 3$; and $M_1$ is selected from Mn and/or Al, $M_2$ is selected from any one or more of Zr, Zn, Cu, Cr, Mg, Fe, V, Ti, Sr, Sb, Y, W, and Nb, and R is selected from any one or more of N, F, S, and Cl.

11. The positive electrode sheet according to claim 10, wherein the first positive electrode active material is in a single-crystalline form.

12. The positive electrode sheet according to any one of claims 1 to 11, wherein the second positive electrode active material has a chemical formula of $Li_{1+x}Mn_{1-y}A_yP_{1-z}E_zO_4$,

wherein $-0.1 \leq x \leq 0.1$, $0.001 \leq y \leq 0.5$, and $0.001 \leq z \leq 0.1$; and
A is selected from any one or more of Zn, Al, Na, K, Mg, Mo, W, Ti, V, Zr, Fe, Ni, Co, Ga, Sn, Sb, Nb, and Ge, and E is selected from any one or more of B, Si, N, S, F, Cl, and Br.

13. A battery cell, comprising the positive electrode sheet according to any one of claims 1 to 12.

14. A battery, comprising the battery cell according to claim 13.

15. An electric device, comprising the battery cell according to claim 13 or the battery according to claim 14, wherein the battery cell or the battery is used to provide electric energy.

FIG. 1

FIG. 2

20

21

23

22

## FIG. 3

30
31

33

32

## FIG. 4

## INTERNATIONAL SEARCH REPORT

| International application No. |
| --- |
| **PCT/CN2023/126260** |

**A.    CLASSIFICATION OF SUBJECT MATTER**

H01M4/131(2010.01)i;  H01M10/0525(2010.01)i

According to International Patent Classification (IPC) or to both national classification and IPC

**B.    FIELDS SEARCHED**

Minimum documentation searched (classification system followed by classification symbols)

H01M4/-,H01M10/-

Documentation searched other than minimum documentation to the extent that such documents are included in the fields searched

Electronic data base consulted during the international search (name of data base and, where practicable, search terms used)

CNTXT, ENTXT, ENTXTC, CNKI, CNABS: 电池, 极片, 晶胞, 晶格, 晶格收缩率, 晶格体积收缩率, 晶格体缩率, 收缩率, 正极, 活性物质, 活性材料, lattice shrinkage, battery, active material, anode, plate

**C.    DOCUMENTS CONSIDERED TO BE RELEVANT**

| Category* | Citation of document, with indication, where appropriate, of the relevant passages | Relevant to claim No. |
| --- | --- | --- |
| X | CN 115483365 A (ZHUHAI COSMX BATTERY CO., LTD.) 16 December 2022 (2022-12-16) <br> embodiment 1, figures 3-4, and description, paragraphs 0023 and 0056 | 1-15 |
| PA | CN 116830333 A (CONTEMPORARY AMPEREX TECHNOLOGY CO., LTD.) 29 September 2023 (2023-09-29) <br> embodiment 1, and claims 1-24 | 1-15 |
| A | CN 115832183 A (CONTEMPORARY AMPEREX TECHNOLOGY CO., LTD.) 21 March 2023 (2023-03-21) <br> embodiment 28, table 4, and descriptions, paragraphs 0055-0074 | 1-15 |
| A | CN 115668535 A (CONTEMPORARY AMPEREX TECHNOLOGY CO., LTD.) 31 January 2023 (2023-01-31) <br> abstract | 1-15 |
| A | CN 116093254 A (CONTEMPORARY AMPEREX TECHNOLOGY CO., LTD.) 09 May 2023 (2023-05-09) <br> abstract | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 March 2024** | **12 March 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/126260**

| C. | DOCUMENTS CONSIDERED TO BE RELEVANT | |
|---|---|---|
| Category* | Citation of document, with indication, where appropriate, of the relevant passages | Relevant to claim No. |
| A | CN 116314602 A (CONTEMPORARY AMPEREX TECHNOLOGY CO., LTD.) 23 June 2023 (2023-06-23) <br> abstract | 1-15 |
| A | US 2020403221 A1 (PANASONIC INTELLECTUAL PROPERTY MANAGEMENT CO., LTD.) 24 December 2020 (2020-12-24) <br> abstract | 1-15 |

Form PCT/ISA/210 (second sheet) (July 2022)

**INTERNATIONAL SEARCH REPORT**
Information on patent family members

International application No.

**PCT/CN2023/126260**

| Patent document<br>cited in search report | | | Publication date<br>(day/month/year) | Patent family member(s) | | | Publication date<br>(day/month/year) |
|---|---|---|---|---|---|---|---|
| CN | 115483365 | A | 16 December 2022 | None | | | |
| CN | 116830333 | A | 29 September 2023 | None | | | |
| CN | 115832183 | A | 21 March 2023 | None | | | |
| CN | 115668535 | A | 31 January 2023 | WO | 2022241712 | A1 | 24 November 2022 |
| | | | | EP | 4117057 | A1 | 11 January 2023 |
| | | | | JP | 2023523875 | A | 08 June 2023 |
| | | | | US | 2023207804 | A1 | 29 June 2023 |
| | | | | JP | 7349029 | B2 | 21 September 2023 |
| CN | 116093254 | A | 09 May 2023 | CN | 116093254 | B | 08 September 2023 |
| CN | 116314602 | A | 23 June 2023 | None | | | |
| US | 2020403221 | A1 | 24 December 2020 | JPWO | 2019167613 | A1 | 04 February 2021 |
| | | | | JP | 7336725 | B2 | 01 September 2023 |
| | | | | WO | 2019167613 | A1 | 06 September 2019 |
| | | | | EP | 3761428 | A1 | 06 January 2021 |
| | | | | EP | 3761428 | A4 | 07 April 2021 |

Form PCT/ISA/210 (patent family annex) (July 2022)

**REFERENCES CITED IN THE DESCRIPTION**

**Patent documents cited in the description**

• CN 202310882443